# EUROPEAN PATENT APPLICATION

(11) **EP 0 528 507 A2**
(43) Date of publication of application: **24.02.1993**
(21) Application number: 92300690.2
(22) Date of filing: 27.01.1992
(51) Int. Cl.: G11B 23/023

(54) **Storage case**

(30) Priority: 15.08.1991 JP 204511/91
(71) Applicant: SLIDEX CORPORATION, Tokyo 171 (JP)
(72) Inventor: Ozeki, Jiro, Tokyo (JP)
(74) Representative: Jackson, Peter Arthur

(57) **Abstract**

A storing case for rectangular cassettes for information recording medium such as a magnetic tape. The case comprises a body which includes a pair of opposed parallel first side walls, and a pair of opposed parallel second side walls substantially perpendicular to the first side walls, the body being opened at least at a front side. The first side walls have inner wall surfaces provided with supporting members which extend in a direction of width of the first side walls and spaced apart each other by a spacing corresponding to a thickness of the cassette, the supporting members being adapted to support the recording medium in parallel with the second side walls, at least one of the first and second side walls being provided at an outer surface with designating label for designating recorded contents of the recording medium.

## Description

The present invention relates to a storing case for an information recording medium such as a magnetic recording tape contained in a cassette.

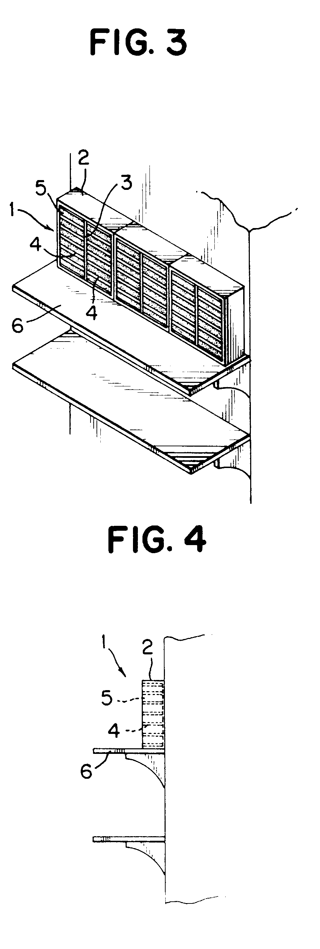

Conventionally, cassettes containing information recording medium such as magnetic tapes are stored in a box type storing case. The storing case is of a rectangular cross-sectional configuration having an open front side. Cassettes containing recording mediums are stacked on shelves provided in the case. A typical example of a conventional storing case is shown in Figure 3 and 4. As shown, the storing case 1 includes a box-shaped body 2 of a rectangular configuration. In the body 2, there is provided a vertical partition wall 3 which divides the interior space of the body 2 into two compartments 4. Each of the compartments 4 has a width which is substantially equal to the length of a cassette 5 containing a recording medium. The depth of the compartment 4 is substantially equal to the width of the cassette 5. In the compartment 4, there are provided a plurality of supporting bar members (not shown) attached to the side walls and the partition wall 3 for supporting cassettes 5. The cassettes 5 are inserted into the compartment 4 with their back side directed outwardly and supported by the bar members in horizontal orientations. The storing case of this type has a depthwise dimension which is smaller than the width and the length.

When the storing cases 1 having cassettes 5 stored therein are to be placed on a shelf 6 for the purpose of display or storing, the cases are usually located with the front sides directed against the backside wall as shown in Figures 3 and 4 so that the labels on the cassettes can be readily observed by a person standing in front of the shelf 6. It should be noted that with this arrangement the number of the cases 1 which can be placed on the shelf 6 is limited because the width of the case is greater than the depth. The cases 1 may be placed with the front side directed sidewardly as shown in Figures 5 and 6 so that the number of the cases 1 placed on the shelf6 can be increased. However, with this arrangement, it is no longer possible for a person standing in front of the shelf 6 to observe the labels on the backside of each cassette 5 in the case 1.

It is therefore an object of the present invention to solve the aforementioned problems of the conventional information recording medium storing case.

More specifically, an object of the present invention is to provide a storing case in which information on recorded contents in recording mediums stored in the case can be readily obtained even when the case is placed with its front opening directed sidewardly.

In order to accomplish the above and other objects, the present invention provides an information recording medium storing case having a side wall provided at an outer surface with means for designating recorded contents of the recording medium which is stored in the case. More specifically, according to the present invention, there is provided a storing case for storing information recording medium of substantially planar configuration, the case including a rectangular box-shaped body having a pair of opposed parallel first walls, a pair of opposed parallel second walls which extend perpendicularly to the first walls, the body being open at least at a front side. Supporting means is provided in the body for supporting the information recording medium in parallel with said first walls. At least one of the first and second walls is provided at an outer surface with means for designating contents recorded in said recording medium stored in the case.

According to the present invention, the designating means can be directed toward the front side of the shelf when the case is placed on the shelf with the open front side directed sidewardly for the purpose of increasing the number of the cases which can be placed on the shelf. It is therefore possible for a person standing in front of the shelf to have an information on the recorded contents in the recording medium. It is preferable to provide the designating means both in the first and second walls. In an arrangement where the designating means is provided both on the first and second walls, it is possible to direct the designating means to the front side of the shelf even when the case is placed so that the recording medium is oriented vertically or horizontally.

The above and other objects and the features of the present invention will become apparent from the following description of preferred embodiments taking reference to the accompanying drawings, in which:

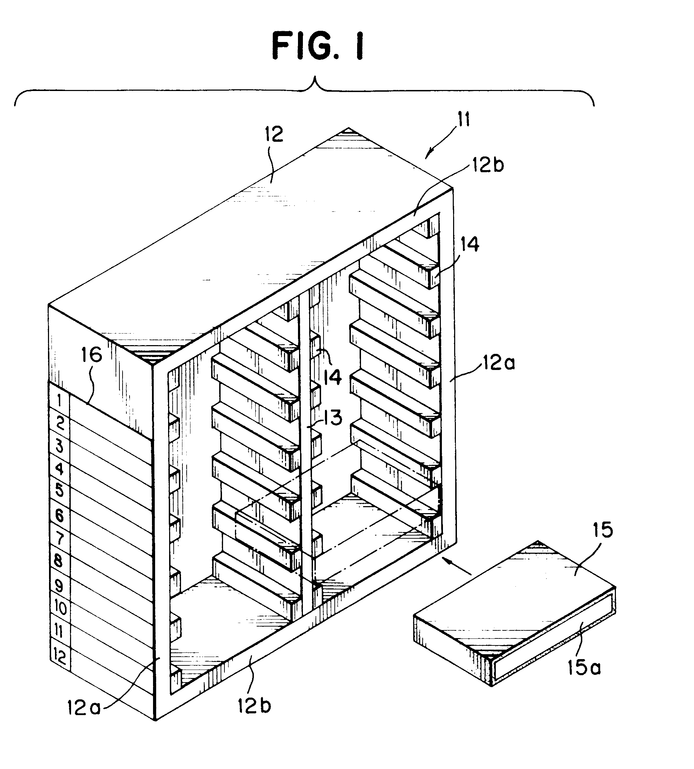

Figure 1 is a perspective view of a storing case for information recording medium in accordance with one embodiment of the present invention;

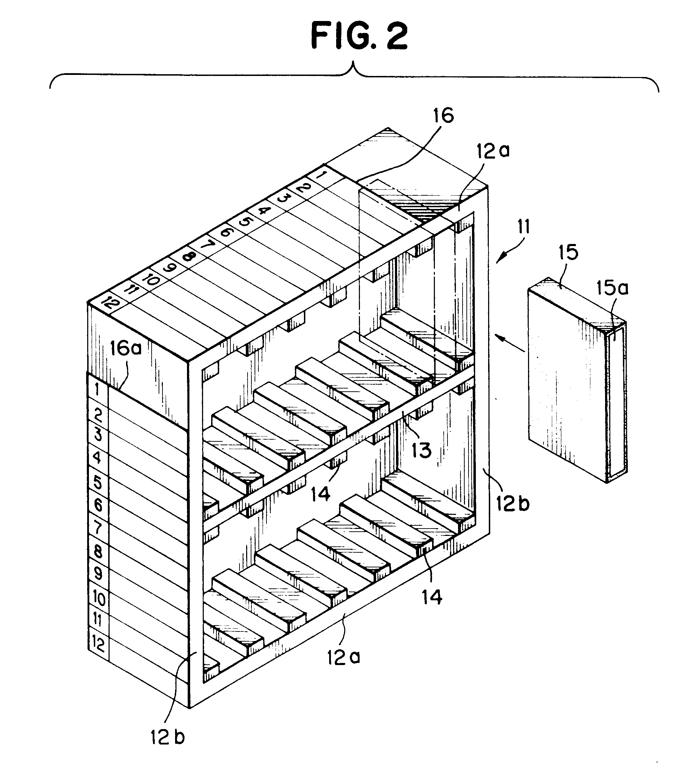

Figure 2 is a perspective view of the storing case in accordance with another embodiment of the present invention;
Figure 3 is a perspective view showing a conventional way of placing storing cases;
Figure 4 is a side view of the arrangement shown in Figure 3;

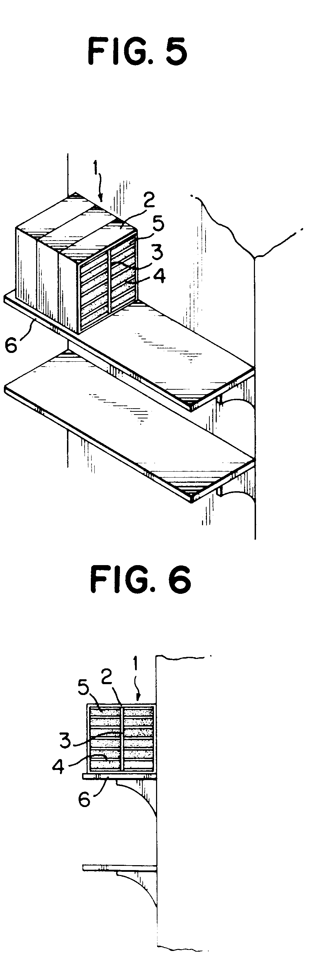

Figure 5 is a perspective view shown another possible way of placing conventional storing cases; and,
Figure 6 is a side view of the arrangement in Figure 5.

Referring to the drawings, particularly to Figure 1, there is shown a storing case 11 for storing a planar information recording medium such as magnetic recording tape contained in a cassette. The case 11 comprises a rectangular box-shaped body 12 which includes a pair of vertically extending side walls 12a and a pair of horizontally extending side walls 12b which are perpendicular to the vertical side walls 12a. The body 12 is further provided with a central partition wall 13 which is parallel with the side walls 12a and divides the interior space of the body 12 into two compartments of equal width.

The central partition wall 13 is provided at the opposite sides with supporting members 14 which are spaced apart in vertical direction and extend in horizontal direction. Each of the side walls 12a is provided at the inner surface with supporting members 14 which are located to be opposed to the supporting members 14 on the partition wall 13. The supporting members 14 extend in the direction of width of the side walls 12 or the partition wall 13. The spacing of adjacent two of the supporting members 14 corresponds to the thickness of the recording medium which is adapted to be stored in the case 11. The supporting members 14 on the partition wall 13 cooperate with the supporting members on the inner surfaces of the side walls 12 to provide supporting shelves for the recording medium.

According to the specific embodiment of the present invention, the information recording medium is in the form of a magnetic tape contained in a cassette. The cassette is contained in a cassette case 15 which has a back side carrying a label 15a designating the recorded contents in the tape. The cassette case 15 is oriented horizontally and received by the storing case 11 to be supported by the supporting members 14.

Referring to Figure 1, it will be noted that one of the vertical walls 12a of the body 12 of the storing case 11 is applied at the outside surface with a label 16 which constitute the designating means of the present invention. The label 16 has columns for designating the recorded contents of the recording medium in the cassette even when the storing case 11 is placed with the front opening directed side-wardly as shown in Figures 5 and 6.

Figure 2 shows another embodiment of the present invention. In this embodiment, the storing case 11 has a body 12 which is similar to the body 12 in the previous embodiment. In the embodiment shown in Figure 2, the designating means is constituted by a label 16 which is applied on one of the vertical walls 12a and an additional label 16a which is applied on one of the horizontal walls 12b. This embodiment is advantageous in that the designation of the recorded contents can be observed in any orientation of the storing case 11.

The invention has thus been shown and described with reference to specific embodiments, however, it should be noted that the invention is in no way limited to the details of the illustrated structures but changes and modifications may be made without departing from the scope of the appended claims.

## Claims

1. A storing case for storing information recording medium of substantially planar configuration, the case including a rectangular box-shaped body having a pair of opposed parallel first walls, a pair of opposed parallel second walls which extend perpendicularly to the first walls, the body being open at least at a front side, supporting means provided in the body for supporting the information recording medium in parallel with said first walls, at least one of the first and second walls being provided at an outer surface with means for designating contents recorded in said recording medium stored in the case.

2. A storing case in accordance with claim 1 in which said designating means includes a label attached to said outer surface of said one of the first and second walls.

3. A storing case in accordance with claim 1 in which said designating means includes a label attached to the outer surface of one of said first walls and another label attached to one of said second walls.

4. A storing case in accordance with claim 1 which includes shelf means for supporting the recording medium in parallel with said first side walls, partition wall means provided in said body to extend between said first walls in parallel with said second walls to divide interior space of said body into a plurality of compartments of equal widths, said shelf means being constituted by supporting members provided on said second walls and said partition wall means to extend in directions of widths of said second walls and said partition wall means.

5. A storing case for rectangular cassettes for information recording medium, said case comprising a body which includes a pair of opposed parallel first side walls, a pair of opposed parallel second side walls substantially perpendicular to said first side walls, said body being opened at least at a front side, said first side walls having inner wall surfaces provided with supporting members which extend in a direction of width of said first side walls and spaced apart each other by a spacing corresponding to a thickness of the cassette containing said recording medium, said supporting members being adapted to support said recording medium in parallel with said second side walls, at least one of said first and second side walls being provided at an outer surface with means for designating recorded contents of said recording medium.
